# EUROPÄISCHE PATENTSCHRIFT

(11) **EP 0 872 931 B1**
(45) Veröffentlichungstag und Bekanntmachung des Hinweises auf die Patenterteilung: **25.11.2009**
(21) Anmeldenummer: 98810268.7
(22) Anmeldetag: 25.03.1998
(51) Int. Cl.: H02B 5/06

(54) **Metallgekapselte gasisolierte Schaltanlage**
Metal clad switchgear
Appareil de commutation électrique blindé à isolation gazeuse

(30) Priorität: 17.04.1997 DE 19716024
(43) Veröffentlichungstag der Anmeldung: 21.10.1998
(73) Patentinhaber: ABB Schweiz AG, 5400 Baden (CH)
(72) Erfinder: Heil, Franz, 5406 Baden-Rütihof (CH); Tecchio, Piero, 5452 Oberrohrdorf (CH)
(74) Vertreter: ABB Patent Attorneys

(56) Entgegenhaltungen:
- DE-A- 2 047 502
- DE-A- 2 646 617

## Beschreibung

### TECHNISCHES GEBIET

Die Erfindung geht aus von einer metallgekapselten gasisolierten Schaltanlage gemäss dem Oberbegriff des Anspruchs 1 oder dem Oberbegriff des Anspruchs 2.

### STAND DER TECHNIK

Aus der Druckschrift Nr. CH-A 161 312 F der Firma Brown, Boveri und Cie. sind einphasig metallgekapselte gasisolierte Schaltanlagen bekannt, die nach einer der verschiedenen Standard-Anlagenschaltungen aufgebaut sind. Standard-Anlagenschaltungen sind beispielsweise die Einfachsammelschienenanordnung, die Einfachsammelschiene mit Hilfsschiene, die 1½-Schalter-Anordnung, die Ringschaltung, die Doppelschalteranordnung, die verschiedenen Anordnungen mit Doppelsammelschienen, usw.. Eine 1½-Schalter-Anordnung mit oben liegenden Sammelschienen ist mit sehr stark versetzt angeordneten Leistungsschaltern realisiert worden. In der Figur 54 dieser Druckschrift ist diese Anordnung dargestellt. Die drei waagrecht angeordneten Leistungsschalter, die pro Phase benötigt werden, sind hier separat und mit vergleichsweise grossem Abstand von der benachbarten Phase angeordnet. Die zwei Sammelschienensysteme liegen in einem Bereich oberhalb der Leistungsschalteranschlüsse in einer Ebene parallel zur Fundamentoberfläche, sie weisen einen grossen Zwischenraum auf, der nicht nutzbar ist. Eine derartige metallgekapselte gasisolierte Schaltanlage weist einen vergleichsweise grossen Platzbedarf auf und ist deshalb in dieser Ausführung für den Einbau in ein Gebäude nur bedingt geeignet. Die Sammelschienen sind vergleichsweise hoch angeordnet, sodass aufwendige und lange metallgekapselte Verbindungsstücke für die elektrischen Verbindungen zwischen den Sammelschienen und den jeweils zugeordneten Leistungsschaltern vorgesehen werden müssen.

Aus der Druckschrift Brown Boveri Technik 9-86, Seiten 488 bis 497, Bild 5, ist eine metallgekapselte gasisolierte Schaltanlage bekannt, die waagrecht in einer Reihe fluchtend nebeneinander angeordnete Leistungsschalter und oberhalb der elektrischen Anschlüsse der Leistungsschalter liegende Sammelschienensysteme aufweist. Diese Sammelschienensysteme liegen in einem Bereich weit oberhalb und zum Teil ausserhalb des durch die senkrecht nach oben führenden elektrischen Anschlüsse des Leistungsschalters abgegrenzten Bereichs, sodass diese den Raum für diese Sammelschienensysteme nicht begrenzen können, deshalb wird für diese Anordnung ein vergleichsweise grosses Bauvolumen benötigt. Auch hier sind aufwendige metallgekapselte Verbindungsstücke für die elektrischen Verbindungen zwischen den Sammelschienen und den jeweils zugeordneten Leistungsschaltern nötig.

Derartige metallgekapselte gasisolierte Schaltanlagen benötigen wegen der vorgegebenen Geometrie vergleichsweise viel Platz. Die vergleichsweise langen Verbindungsstücke zu den Sammelschienen verteuern zudem die Schaltanlage.

Weiter ist aus DE 2047 502 eine Metallgekapselte, druckgasisolierte Hochspannungs-Schaltanlage bekannt, wie sie für 110 kV und höher vielfach als raumsparende Anlagen mit z.B. SF6 als Isoliergas in Gebäuden innerhalb von Städten oder auch im Freien vorgesehen werden. DE 2047 502 sieht vor, dass die zur Verwirklichung der verschiedenen Grundschaltungen und Bauweisen besonders wichtigen Bausteine wie Trenner, Verteilungsbausteine, Sammelschienenanschlussbausteine, Stromwandler und Verbindungsbausteine das gleiche Teilungsmass und gleiche Anschlussflansche aufweisen und dass andere Geräte, wie die Schnellerder, so ausgebildet sind, dass sie in dieses Teilungsmass passen.
Weiter ist aus DE 26 46 617 eine Schaltanlage in vollisolierter Technik bekannt, welche nach der 1 ½-Leistungsschaltermethode aufgebaut ist.

### DARSTELLUNG DER ERFINDUNG

Die Erfindung, wie sie in den unabhängigen Ansprüchen gekennzeichnet ist, löst die Aufgabe, eine metallgekapselte gasisolierte Schaltanlage zu schaffen, die so ausgebildet ist, dass sie einen wesentlich kleineren Platzbedarf hat.

Die durch die Erfindung erreichten Vorteile sind darin zu sehen, dass die bei konventionellen gasisolierten Schaltanlagen nötigen verschiedenen Verbindungsgehäuse durch die modulare Bauweise der Schaltanlage vereinheitlicht werden. Insbesondere wirkt es sich vorteilhaft aus, dass die benötigte Bauhöhe der Schaltanlage generell kleiner ist, als bei konventionellen Schaltanlagen. Die metallgekapselte gasisolierte Schaltanlage ist vergleichsweise sehr kompakt aufgebaut, was sich bezüglich Erdbebensicherheit besonders vorteilhaft auswirkt. Die dreiphasigen Transporteinheiten dieser Schaltanlage können vorteilhaft klein ausgeführt werden, sodass keine Spezialfahrzeuge für ihren Transport nötig sind. Infolge des Wegfallens dieser verschiedenen Verbindungsgehäuse wird eine dichtere Packung der in der gasisolierten Schaltanlage installierten Apparate möglich.

Die Leistungsschalter können sowohl gegeneinander um ein Modulmass M versetzt als auch in einer Reihe fluchtend nebeneinander angeordnet werden, zudem ist es möglich, die im Leistungsschalter eingesetzten Löschkammern sowohl antriebsseitig als auch auf der dem Antrieb abgewandten Stirnseite des Leistungsschalterkessels für Revisionen zu demontieren bzw. zu montieren. Es ist demnach möglich, den Bedienungsgang für diese Schaltanlage entweder auf der Antriebsseite des Leistungsschalters oder auf der dem Antrieb abgewandten Seite des Leistungsschalters vorzusehen. Die erfindungsgemässe metallgekapselte gasisolierte Schaltanlage bietet demnach eine Vielfalt von Schaltungsmöglichkeiten, eine Vielfalt von Ausgestaltungsmöglichkeiten und sehr flexible Einbaumöglichkeiten in Gebäude, sodass, den jeweiligen Kundenwünschen entsprechend, stets eine vom Preis und Platzbedarf her optimale Schaltanlage verfügbar ist.

Die Ausführung mit um ein Modulmass M versetzt angeordneten Leistungsschaltern stellt eine besonders wirtschaftliche Lösung dar.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnung, welche lediglich einen möglichen Ausführungsweg darstellt, näher erläutert.

### KURZE BESCHREIBUNG DER ZEICHNUNG

Es zeigen:
Fig. 1 eine vereinfachte perspektivische Darstellung einer ersten Ausführungsform eines als Abgangsfeld ausgelegten Schaltfeldes der metallgekapselten gasisolierten Schaltanlage,
Fig. 1a eine vereinfachte Seitenansicht des Schaltfeldes gemäss Fig. 1,
Fig. 1b eine vereinfachte Ansicht des Schaltfeldes gemäss Fig. 1 von der Antriebsseite her,
Fig. 1c eine vereinfachte Draufsicht auf das Schaltfeld gemäss Fig. 1,

Fig. 2 die schematisch dargestellte Anordnung der Sammelschienen und der Leistungsschalter im Schaltfeld gemäss Fig. 1,

Fig. 3 eine vereinfachte perspektivische Darstellung einer Ausführungsform eines als Kuppelfeld für die Längskupplung von Sammelschienen ausgelegten Schaltfeldes der metallgekapselten gasisolierten Schaltanlage,
Fig. 3a eine vereinfachte Seitenansicht des Kuppelfeldes gemäss Fig. 3,
Fig. 3b eine vereinfachte Ansicht des Kuppelfeldes gemäss Fig. 3 von der Antriebsseite her,
Fig. 3c eine vereinfachte Draufsicht auf das Kuppelfeld gemäss Fig. 3,

Fig. 4 eine vereinfachte perspektivische Darstellung einer ersten Ausführungsform einer aus drei Schaltfeldern zusammengesetzten 1½-Schalter-Anordnung,
Fig. 4a eine vereinfachte Seitenansicht der 1½-Schalter-Anordnung gemäss Fig. 4,
Fig. 4b eine vereinfachte Ansicht der 1½-Schalter-Anordnung gemäss Fig. 4 von der Antriebsseite her,
Fig. 4c eine vereinfachte Draufsicht auf die 1½-Schalter-Anordnung gemäss Fig. 4,

Fig. 5 eine vereinfachte perspektivische Darstellung einer zweiten Ausführungsform eines als Abgangsfeld ausgelegten Schaltfeldes der metallgekapselten gasisolierten Schaltanlage,
Fig. 5a eine vereinfachte Seitenansicht des Schaltfeldes gemäss Fig. 5,
Fig. 5b eine vereinfachte Ansicht des Schaltfeldes gemäss Fig. 5 von der Antriebsseite her,
Fig. 5c eine vereinfachte Draufsicht auf das Schaltfeld gemäss Fig. 5,

Fig. 6 die schematisch dargestellte Anordnung der Sammelschienen und der Leistungsschalter im Schaltfeld gemäss Fig. 5,

Fig. 7 eine vereinfachte perspektivische Darstellung einer dritten Ausführungsform eines als Abgangsfeld ausgelegten Schaltfeldes der metallgekapselten gasisolierten Schaltanlage,
Fig. 7a eine vereinfachte Seitenansicht des Schaltfeldes gemäss Fig. 7,
Fig. 7b eine vereinfachte Ansicht des Schaltfeldes gemäss Fig. 7 von der Antriebsseite her,
Fig. 7c eine vereinfachte Draufsicht auf das Schaltfeld gemäss Fig. 7,

Fig. 8 eine vereinfachte perspektivische Darstellung einer Ausführungsform eines als Kuppelfeld für die Querkupplung von Sammelschienen ausgelegten Schaltfeldes der metallgekapselten gasisolierten Schaltanlage,
Fig. 8a eine vereinfachte Seitenansicht des Kuppelfeldes gemäss Fig. 8,

Fig. 9 eine vereinfachte perspektivische Darstellung einer zweiten Ausführungsform einer aus drei Schaltfeldern zusammengesetzten 1½-Schalter-Anordnung,
Fig. 9a eine vereinfachte perspektivische Darstellung einer einzigen herausgezeichneten Phase der Ausführungsform der 1½-Schalter-Anordnung gemäss Fig. 9, und

Fig. 10 einen Schnitt durch ein vereinfacht dargestelltes, als Verbindungselement ausgelegtes Gehäuse.

Bei allen Figuren sind gleich wirkende Elemente mit gleichen Bezugszeichen versehen. Alle für das unmittelbare Verständnis der Erfindung nicht erforderlichen Elemente sind nicht dargestellt bzw. nicht beschrieben.

### WEGE ZUR AUSFÜHRUNG DER ERFINDUNG

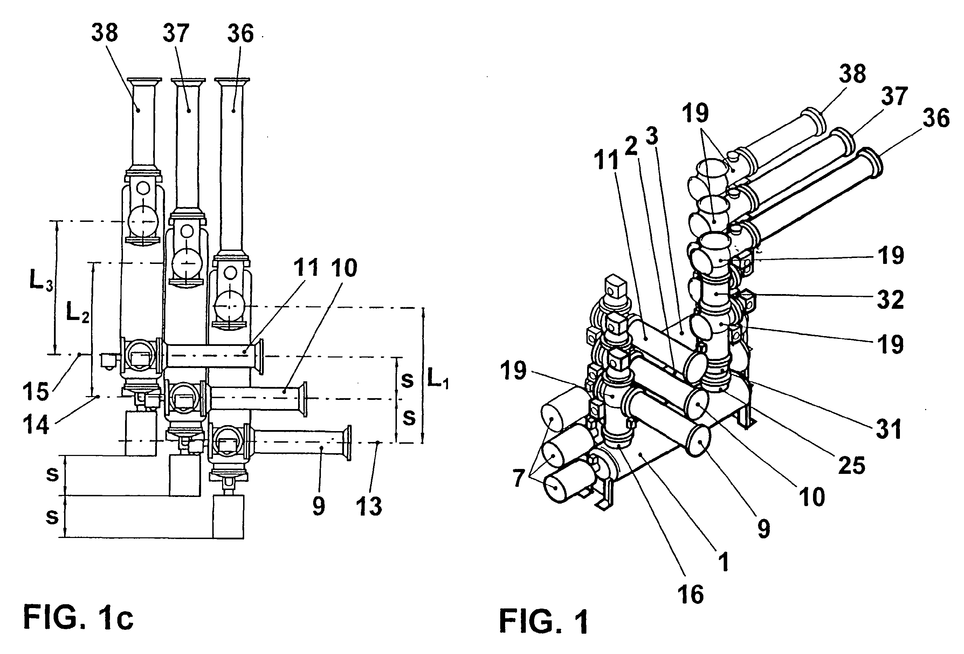

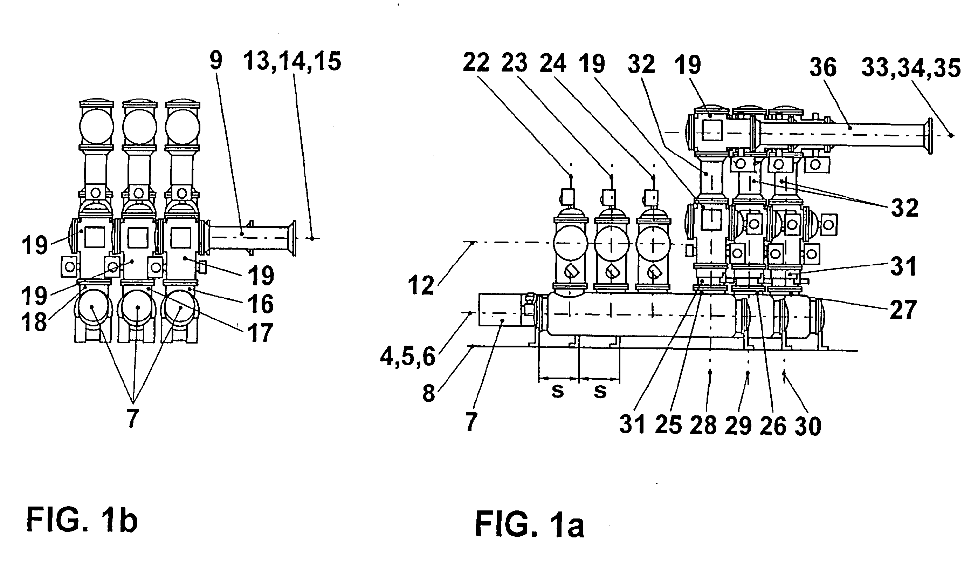

Die Fig. 1 zeigt eine vereinfachte perspektivische Darstellung eines als Abgangs feld ausgelegten Schaltfelds der einphasig metallgekapselten gasisolierten Schaltanlage, und die Fig. 1a zeigt eine vereinfachte Seitenansicht dieses Schaltfeldes. Die Innenräume der Schaltanlage sind mit einem isolierenden Medium, beispielsweise mit SF₆-Gas, gefüllt, welches mit etwa 5 bis 6 bar Druck beaufschlagt ist. Bei dieser Ausführungsform des Schaltfelds sind die drei Leistungsschalter 1, 2, 3 waagrecht und parallel zueinander unmittelbar nebeneinander angeordnet. Die Leistungsschalter 1, 2, 3 weisen jeweils eine Längsachse 4, 5, 6 auf, wobei die Längsachse 4 dem Leistungsschalter 1, die Längsachse 5 dem Leistungsschalter 2 und die Längsachse 6 dem Leistungsschalter 3 zugeordnet ist. Jeder der Leistungsschalter 1, 2, 3 ist mit einem separaten Antrieb 7 versehen. Die Längsachsen 4, 5, 6 liegen hier in einer ersten Ebene, welche parallel zu der Fundamentoberfläche 8, auf der die Leistungsschalter 1, 2, 3 befestigt sind, angeordnet ist. Diese erste Ebene kann ohne weiteres, wenn dies erforderlich sein sollte, auch senkrecht zur Fundamentoberfläche 8 angeordnet werden.

Die Leistungsschalter 1, 2, 3 sind in axialer Richtung versetzt um ein Modulmass M angeordnet. Dieses Modulmass M entspricht genau dem Achsabstand s der Sammelschienen 9, 10, 11, die in einer durch eine strichpunktierte Linie 12 angedeuteten zweiten Ebene plaziert sind. Diese zweite Ebene ist parallel zur ersten Ebene angeordnet. Die Sammelschienen 9, 10, 11 weisen, wie aus der Draufsicht der Fig. lc ersichtlich ist, parallel zueinander und senkrecht zu den Längsachsen 4, 5, 6 verlaufende Achsen 13, 14, 15 auf, wobei die Achse 13 der Sammelschiene 9, die Achse 14 der Sammelschiene 10 und die Achse 15 der Sammelschiene 11 zugeordnet ist.

Die Leistungsschalter 1, 2, 3 weisen auf der Antriebsseite einen senkrecht nach oben gerichteten Anschlussstutzen 16, 17, 18 auf, wie dies aus der Fig. 1b ersichtlich ist, wobei der Anschlussstutzen 16 dem Leistungsschalter 1, der Anschlussstutzen 17 dem Leistungsschalter 2 und der Anschlussstutzen 18 dem Leistungsschalter 3 zugeordnet ist. Auf diese Anschlussstutzen 16, 17, 18 ist jeweils ein universell einsetzbares Verbindungselement 19 druckdicht aufgeflanscht.

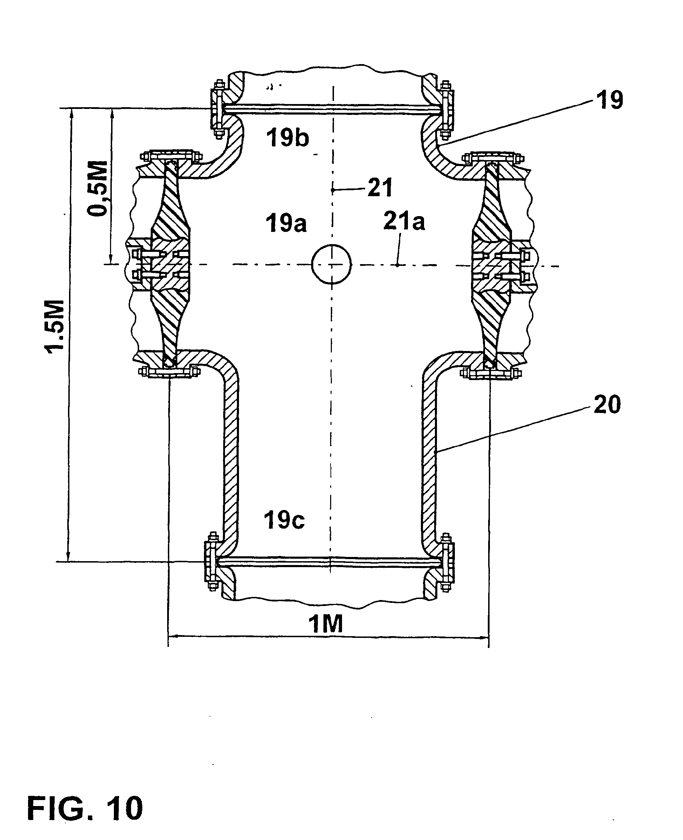

Das Verbindungselement 19, welches in der Fig. 10 vereinfacht dargestellt ist, ist aus dem in der Patentanmeldung EP 0 744 803 A2 beschriebenen Gehäuse hervorgegangen, es braucht deshalb hier nicht näher beschrieben zu werden. Es bietet nach wie vor die in der erwähnten Patentanmeldung beschriebenen Einbaumöglichkeiten für verschiedene Trennervarianten. In dem neu angefügten Verlängerungsteil 20, welches symmetrisch zu einer Längsachse 21 angeordnet ist, sind nicht dargestellte Einbaumöglichkeiten für Erder, Berstscheiben, Sensoren usw. vorgesehen. Senkrecht zur Längsachse 21 ist eine Querachse 21a vorgesehen. Die Längsachse 21 des Verbindungselements 19 fällt mit den jeweiligen Längsachsen 22, 23, 24 der antriebsseitigen Anschlussstutzen 16, 17, 18 der Leistungsschalter 1, 2, 3 zusammen. Die Längsachse 22 ist dem Anschlussstutzen 16, die Längsachse 23 ist dem Anschlussstutzen 17 und die Längsachse 24 ist dem Anschlussstutzen 18 zugeordnet. Die Sammelschienen 9, 10, 11 führen durch das jeweilige Verbindungselement 19 hindurch, wobei in einem Innenraum 19a des Verbindungselements 19 ein Abzweigtrenner angeordnet ist, der die elektrische Verbindung von den Sammelschienen 9, 10, 11 zum jeweilig zugeordneten Leistungsschalter 1, 2, 3 unterbrechen kann. Die obere Öffnung 19b der Verbindungselemente 19 ist hier mit einem Deckel druckdicht abgeschlossen, der den Antrieb des im Innenraum 19a angeordneten Abzweigtrenners trägt.

Die Länge des Verbindungselements 19 in Richtung der Längsachse 21 beträgt das 1,5-fache des Modulmasses M zwischen den Mitten der dichtenden Flanschzwischenlagen, die Breite des Verbindungselements 19 in Richtung der Querachse 21a senkrecht zur Längsachse 21 entspricht dem Modulmass M bis zu den Mitten der Isolatorflansche. Diese Isolatorflansche sind gleich dick ausgeführt wie die dichtenden Flanschzwischenlagen.

Die Leistungsschalter 1, 2, 3 weisen auf der dem Antrieb abgewandten Seite einen senkrecht nach oben gerichteten Anschlussstutzen 25, 26, 27 auf, wie dies aus der Fig. 1a ersichtlich ist, wobei der Anschlussstutzen 25 dem Leistungsschalter 1, der Anschlussstutzen 26 dem Leistungsschalter 2 und der Anschlussstutzen 27 dem Leistungsschalter 3 zugeordnet ist. Dem Anschlussstutzen 25 ist eine Längsachse 28, dem Anschlussstutzen 26 ist eine Längsachse 29 und dem Anschlussstutzen 27 ist eine Längsachse 30 zugeordnet.

An die Anschlussstutzen 25, 26, 27 ist hier jeweils ein Zwischenstück 31 angeflanscht. Das Zwischenstück 31 kann beispielsweise Sensoren, wie beispielsweise Stromsensoren, enthalten. Das Zwischenstück 31 weist eine Baulänge auf, die dem 0,5-fachen Modulmass M entspricht. Auf die Zwischenstücke 31 ist jeweils ein Verbindungselement 19 so aufgesetzt, dass seine Längsachse 21 mit den Längsachsen 28, 29, 30 zusammenfällt. In diese Verbindungselemente 19 ist ein Längstrenner eingebaut, der die elektrische Verbindung zwischen einem Abgang und dem jeweils zugeordneten Leistungsschalter 1, 2, 3 unterbrechen kann. Auf die obere Öffnung 19b des Verbindungselements 19 ist hier ein Zwischenrohr 32 druckdicht aufgesetzt. Das Zwischenrohr 32 weist eine Baulänge auf, die dem einfachen Modulmass M entspricht. Auf das Zwischenrohr 32 ist ein weiteres Verbindungselement 19 aufgebaut, allerdings so, dass die Querachse 21a mit der jeweiligen Längsachse 28, 29, 30 zusammenfällt. Die Längsachse 21 dieser Verbindungselemente 19 fällt mit den in einer dritten Ebene liegenden Längsachsen 33, 34, 35 von Abgängen 36, 37, 38 zusammen. Die Fig.1 zeigt die Abgänge 36, 37, 38 parallel zueinander angeordnet, wenn jedoch beispielsweise die Enden der Abgänge 36, 37, 38 mit Hochspannungsdurchführungen für einen Übergang in eine Hochspannungs-Freileitung versehen werden, so müssen die Abgänge 36, 37, 38 aufgespreizt werden, um an deren Ende die nötigen Spannungsabstände für die Freileitung zu erreichen. Dieses Aufspreizen der Abgänge 36, 37, 38 wird durch ein einfaches Verdrehen der Zwischenrohre 32 erreicht.

Auf die oberen Öffnungen der oben quer liegenden Verbindungselemente 19 könnte hier noch eine dreiphasige Hilfssammelschiene aufgesetzt werden, wenn in diese Verbindungselemente 19 jeweils ein Winkeltrenner für das Zuschalten dieser Hilfssammelschiene eingebaut würde. Die Aktivteile, die im Innern der erwähnten Metallkapselung stets für die elektrischen Verbindungen stets vorhanden sind, werden hier nicht näher beschrieben.

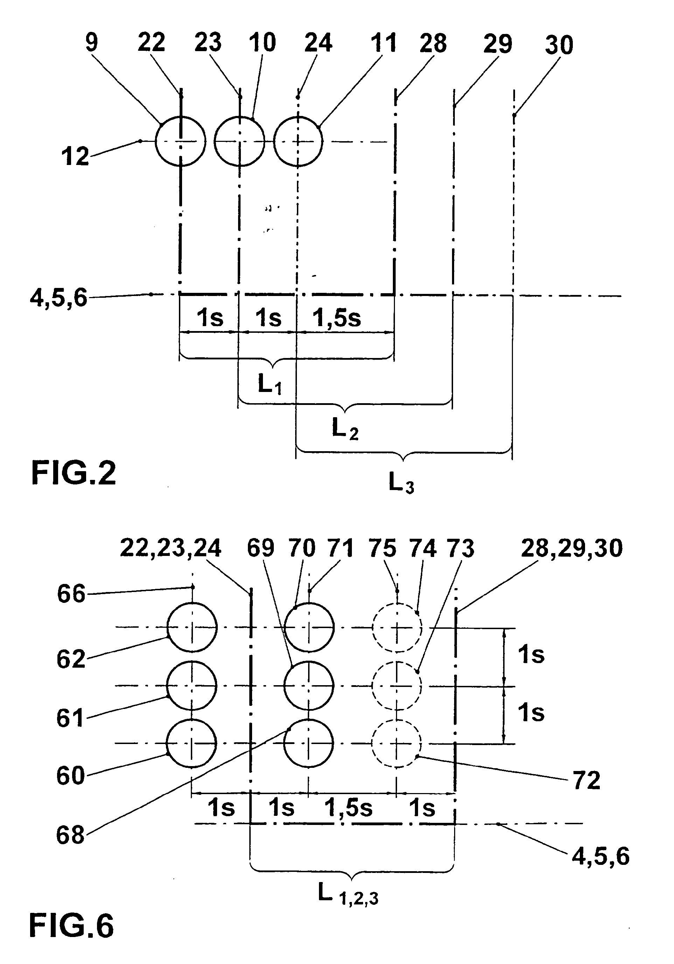

Die Fig. 2 zeigt die schematisch dargestellte Anordnung der Sammelschienen 9, 10, 11 und der im Zusammenhang mit der Anordnung der Leistungsschalter 1, 2, 3 wichtigen Längsachsen im Schaltfeld gemäss Fig. 1 bzw. Fig. 1a. Die Längsachsen 4, 5, 6 der Leistungsschalter 1, 2, 3 liegen in einer ersten Ebene parallel zu der Fundamentoberfläche 8. Die Längsachsen 22 und 28 der Anschlüsse des Leistungsschalters 1 sind hier im Ausführungsbeispiel im Abstand L₁ angeordnet. Die Längsachsen 23 und 29 der Anschlüsse des Leistungsschalters 2 sind hier im Ausführungsbeispiel im Abstand L₂ angeordnet. Die Längsachsen 24 und 30 der Anschlüsse des Leistungsschalters 3 sind hier im Ausführungsbeispiel im Abstand L₃ angeordnet. Die drei Abstände L₁, L₂, L₃ sind jedoch, bedingt durch die gleichmässige Versetzung der Leistungsschalter 1, 2, 3 gleich gross, nämlich jeweils entsprechend dem 3,5-fachen Achsabstand s der Sammelschienen oder entsprechend dem 3,5-fachen Modulmass M.

Der U-förmig ausgebildete Bereich zwischen den Längsachsen 22, 4 und 28 oberhalb des Leistungsschalters 1 mit der Breite 3,5 M, reicht aus, um alle drei Sammelschienen 9, 10, 11 aufzunehmen, wobei der Querschnitt der Sammelschiene 9 nur zur Hälfte in diesem Bereich liegt. Der U-förmig ausgebildete Bereich zwischen den Längsachsen 23, 5 und 29 oberhalb des Leistungsschalters 2 mit der Breite 3,5 M, nimmt lediglich noch zwei Sammelschienen 10 und 11 auf, wobei der Querschnitt der Sammelschiene 10 nur zur Hälfte in diesem Bereich liegt, wie dies aus der Fig. 1c deutlich ersichtlich ist. Die Sammelschiene 9 führt beim Leistungsschalter 2 bereits ausserhalb des angegebenen Bereichs vorbei. Der U-förmig ausgebildete Bereich zwischen den Längsachsen 24, 6 und 30 oberhalb des Leistungsschalters 3 mit der Breite 3,5 M, nimmt lediglich noch eine Sammelschiene 11 zum Teil auf, wobei der Querschnitt der Sammelschiene 11 nur zur Hälfte in diesem Bereich liegt, wie dies aus der Fig. 1c deutlich ersichtlich ist. Die Sammelschienen 9 und 10 führen beim Leistungsschalter 3 bereits ausserhalb des angegebenen Bereichs vorbei. Eigentlich würden für die Montage der Sammelschienen 9, 10, 11 U-förmige Bereiche mit 3M Breite genügen, gewählt wurde jedoch eine Breite von 3,5M.

Diese waagrechte Anordnung der Sammelschienen 9, 10, 11 erlaubt es, diese Sammelschienen vergleichsweise geringem Abstand von der Fundamentoberfläche 8 anzuordnen, sodass bei mechanischen und bei elektrodynamischen Stossbelastungen mechanisch angeregte Schwingungen nur in geringem Umfang auftreten können. Der Abgangsteil auf der dem Antrieb 7 abgewandten Seite der Leistungsschalter 1, 2, 3 ist ebenfalls vergleichsweise niedrig ausgeführt, sodass der Schwerpunkt des gesamten Schaltfelds niedrig liegt, was sich bei Erdbebenbelastungen besonders vorteilhaft auswirkt. Dieses mit einer Einfachsammelschiene ausgerüstete Schaltfeld ist besonders kompakt ausgeführt, sodass sich vorteilhaft kleine Transporteinheiten ergeben.

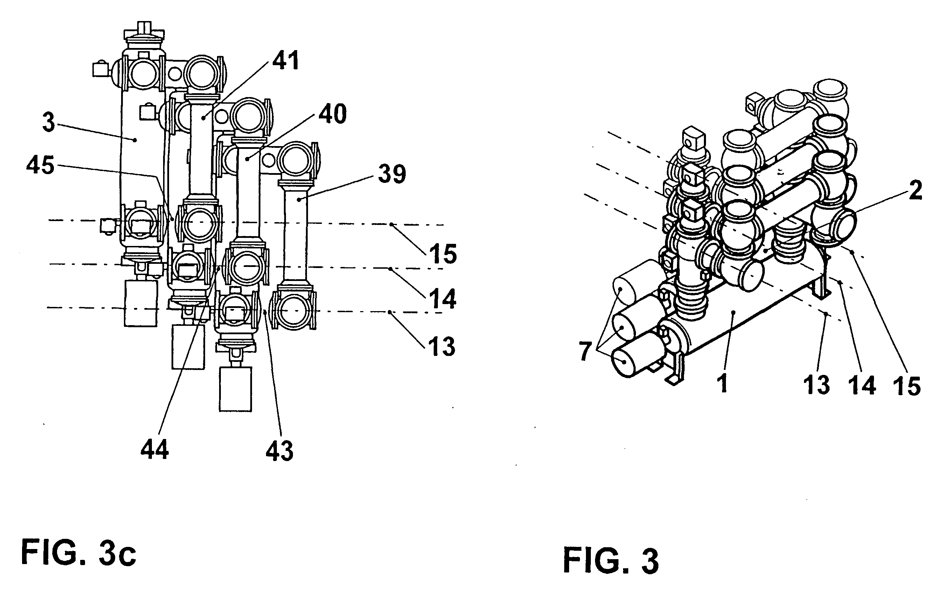

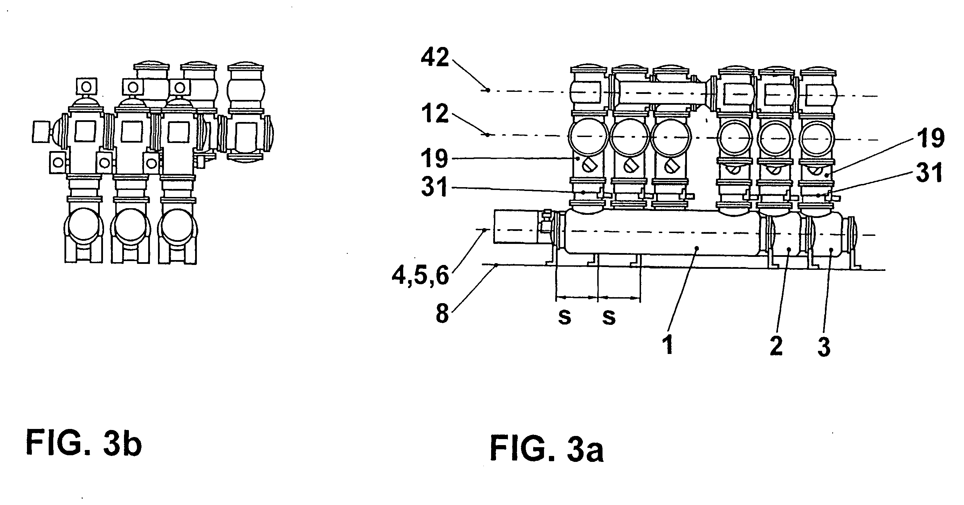

Die Fig. 3, 3a, 3b und 3c zeigen eine vereinfachte Darstellung einer Ausführungsform eines als Kuppelfeld für die Längskupplung von Sammelschienen ausgelegten Schaltfeldes der metallgekapselten gasisolierten Schaltanlage. Dieses Kuppelfeld ist ebenfalls sehr kompakt ausgeführt. Die vereinfachte Draufsicht auf das Kuppelfeld in Fig. 3c zeigt die Achsen 13, 14, 15 der nicht dargestellten, von links an dieses Kuppelfeld angeschlossenen Sammelschienen. Jede der Sammelschienen ist elektrisch leitend antriebsseitig mit dem zugeordneten Leistungsschalter verbunden, wobei hierfür jeweils ein Verbindungselement 19 und ein Zwischenstück 31 eingesetzt wird. Auf der dem Antrieb 7 abgewandten Seite geht die Strombahn weiter, ebenfalls jeweils durch ein Zwischenstück 31 und ein Verbindungselement 19. In der Höhe der durch die strichpunktierte Linie 12 angedeuteten zweiten Ebene in der die Achsen 13, 14, 15 der Sammelschienen liegen, biegt die Strombahn um in eine Richtung parallel zu den Achsen 13, 14, 15 und danach in eine Richtung senkrecht zur zweiten Ebene. Verbindungsschienen 39, 40, 41 die in einer durch eine strichpunktierte Linie 42 angedeuteten weiteren Ebene über den Sammelschienen liegen, kontaktieren von oben die entsprechenden Sammelschienen, die entlang den Achsen 13, 14, 15 nach rechts vom Kuppelfeld weg führen. Die weitere Ebene liegt um das Modulmass M oberhalb der Sammelschienen. Zwischen den Kapselungen der ankommenden Sammelschienen und den Kapselungen der in der gleichen Ebene liegenden wegführenden Sammelschienen verbleiben sichtbare Zwischenräume 43, 44, 45, siehe Fig. 3c. Dieses Kuppelfeld für die Längskupplung von Sammelschienen zeichnet sich durch eine besonders geringe Bauhöhe aus.

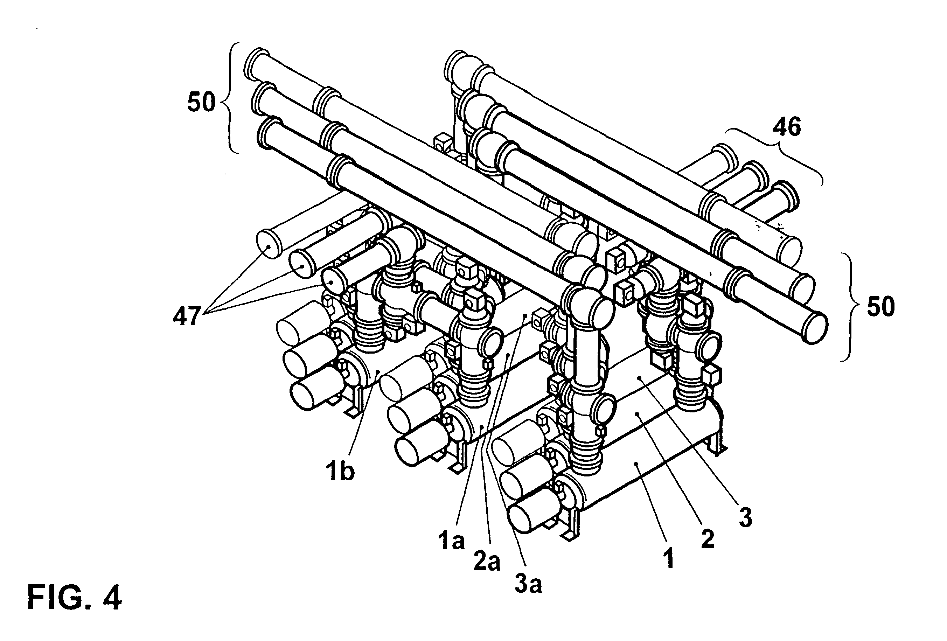

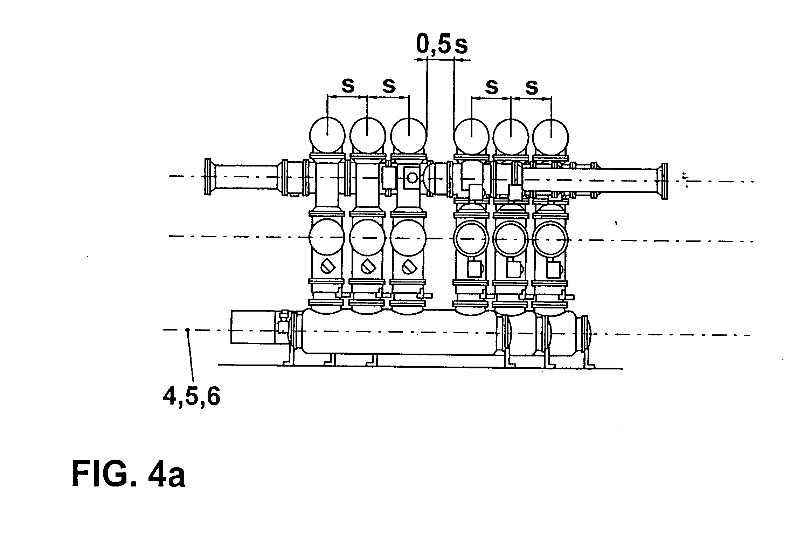

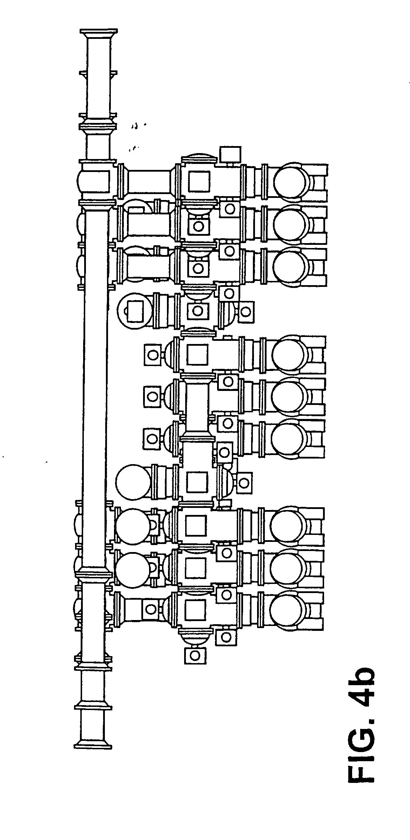

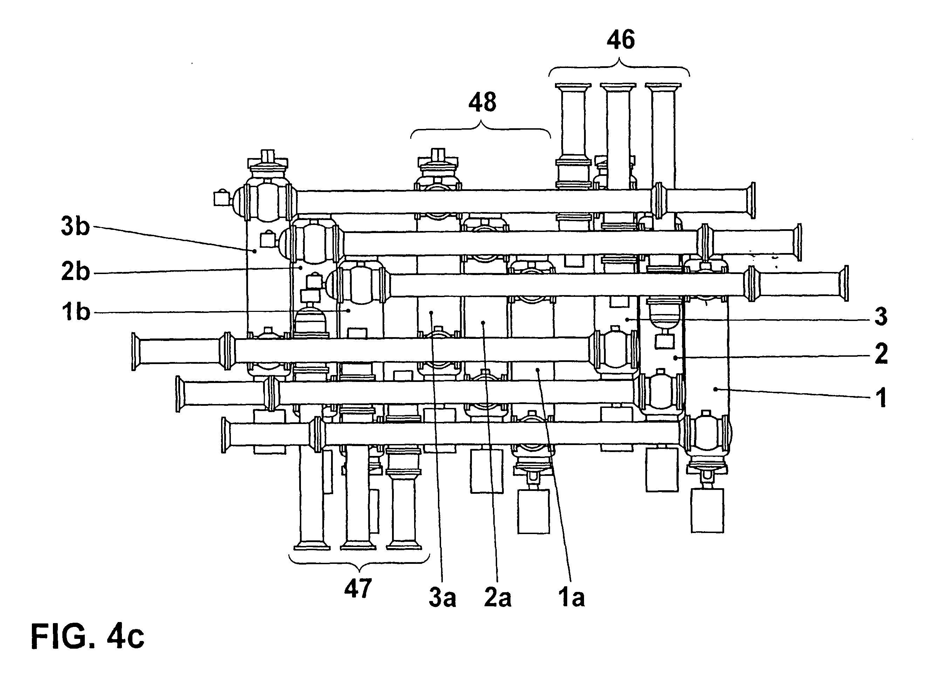

Die Figuren 4, 4a, 4b und 4c zeigen eine vereinfachte Darstellung einer ersten Ausführungsform einer aus drei Schaltfeldern, nämlich aus zwei Abgangsfeldern 46 und 47 und einem zwischen ihnen angeordneten Kuppelfeld 48 zusammengesetzten 1½-Schalter-Anordnung. Die beiden durchgehenden Sammelschienensysteme 49 und 50 liegen oberhalb der Ebene für die Abgänge, aber innerhalb der U-förmigen Bereiche über den Leistungsschaltern, ähnlich wie im Zusammenhang mit Fig. 2 beschrieben. Die Achsabstände sind gleich wie bei der Fig. 2. Die Leistungsschalter 1, 2, 3 sind dem Abgangsfeld 46 zugeordnet, die Leistungsschalter 1a, 2a, 3a sind dem Kuppelfeld 48 zugeordnet, die Leistungsschalter 1b, 2b, 3b sind dem zweiten Abgangsfeld 47 zugeordnet. Die jeweils pro Schaltfeld drei Leistungsschalter sind versetzt zueinander angeordnet, wie dies bei den voranstehenden Ausführungsbeispielen beschrieben ist. Diese 1½-Schalter-Anordnung ist besonders kompakt und platzsparend aufgebaut worden.

Die weiteren Ausführungsbeispiele betreffen Schaltfelder bei denen die Leistungsschalter 1, 2, 3 gleich aufgebaut sind, wie dies bereits beschrieben wurde, sie sind jetzt allerdings in einer Reihe fluchtend unmittelbar nebeneinander aufgestellt. Auch diese Aufstellungsvariante bietet, wie die Aufstellung mit versetzt angeordneten Leistungsschaltern, eine Vielzahl von günstigen Aufbauvarianten für Schaltfelder.

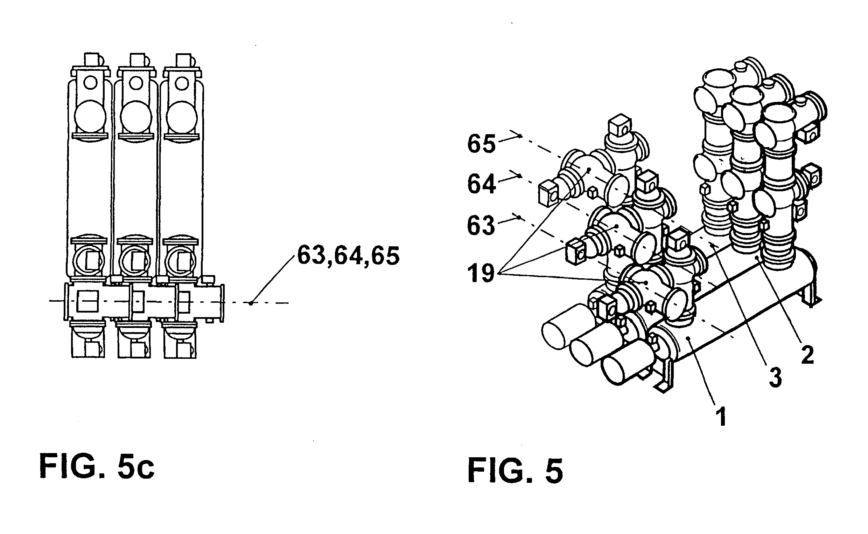

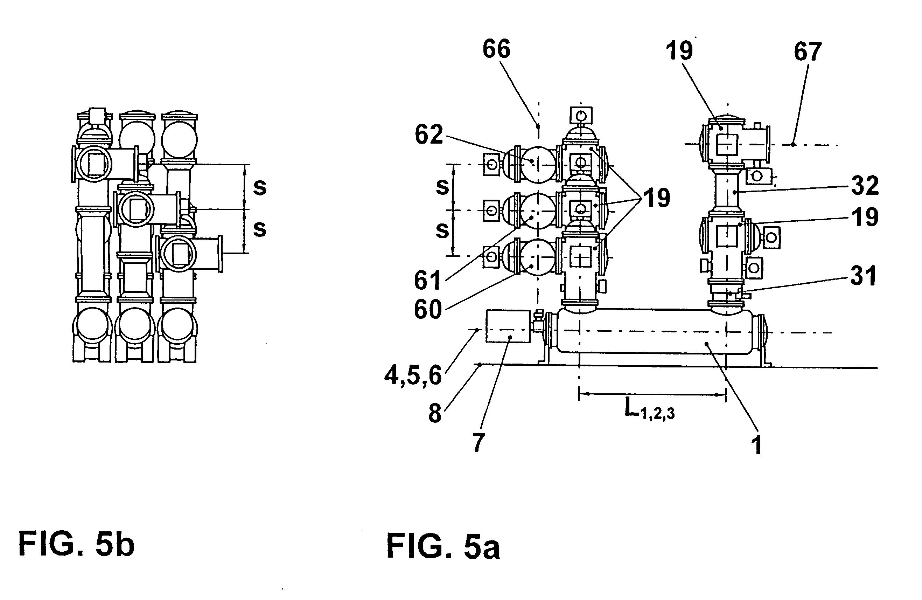

Die Figuren 5, 5a, 5b und 5c zeigen eine vereinfachte Darstellung einer zweiten Ausführungsform eines als Abgangsfeld ausgelegten Schaltfeldes der metallgekapselten gasisolierten Schaltanlage. Bei diesem Schaltfeld sind die als Einfachsammelschiene ausgelegten Sammelschienen 60, 61, 62 im Achsabstand s, welcher dem Modulmass M entspricht, senkrecht übereinander vollständig ausserhalb des U-förmigen Bereichs der Leistungsschalter 1, 2, 3 angeordnet. Diese Sammelschienen 60, 61, 62 könnten jedoch auch vollständig innerhalb des U-förmigen Bereichs angeordnet werden. Die Achsen 63, 64, 65 der Sammelschienen 60, 61, 62 liegen in einer durch eine strichpunktierte Linie 66 angedeuteten Ebene, die senkrecht zur Fundamentoberfläche 8 und zur ersten Ebene angeordnet ist. Die Richtung der Achsen 63, 64, 65 der Sammelschienen 60, 61, 62 verläuft senkrecht zur Richtung der Längsachsen 4, 5, 6 der Leistungsschalter 1, 2, 3. Die Sammelschiene 60 ist mit dem Leistungsschalter 1, die Sammelschiene 61 ist mit dem Leistungsschalter 2 und die Sammelschiene 62 ist mit dem Leistungsschalter 3 verbunden. Die antriebsseitige Verbindung mit den Sammelschienen 60, 61, 62 ist mittels Verbindungselementen 19 und Zwischenstücken 31 so verwirklicht worden, dass der gleiche Achsabstand s der Sammelschienen 60, 61, 62 erreicht wird wie bei den vorherigen Ausführungsbeispielen. Der Aufbau der jeweils den Abgang tragenden Säule entspricht demjenigen, der in der Fig. 1a dargestellt ist. Der Abgang wird durch eine Achse 67 angedeutet. Das Verbindungselement 19 ist hier liegend, wie aus der Fig. 5 ersichtlich, jeweils als Teil der Sammelschienen 60, 61, 62 eingesetzt worden.

Die Fig. 6 zeigt die schematisch dargestellte Anordnung der Sammelschienen 60, 61, 62 und der Leistungsschalter im Schaltfeld gemäss Fig. 5 und weitere Anordnungsmöglichkeiten für Sammelschienen. Die Sammelschienen 60, 61, 62 sind im Abstand s von den Längsachsen 22, 23, 24 der antriebsseitigen Anschlussstutzen 16, 17, 18 der Leistungsschalter 1, 2, 3 ausserhalb des U-förmigen Bereichs senkrecht übereinander angeordnet. Wenn die Anlage mit einem Doppelsammelschienensystem ausgerüstet werden soll, dann werden die zusätzlichen Sammelschienen 68, 69, 70 spiegelbildlich zu den Sammelschienen 60, 61, 62 im Abstand s von den Längsachsen 22, 23, 24 im Innern des U-förmigen Bereichs über den Leistungsschaltern 1, 2, 3 angeordnet. Die Achsen dieser Sammelschienen 68, 69, 70 verlaufen in einer durch eine strichpunktierte Linie 71 angedeuteten Ebene parallel zu den Sammelschienen 60, 61, 62. Die einander zugeordneten Sammelschienen liegen auf gleicher Höhe.

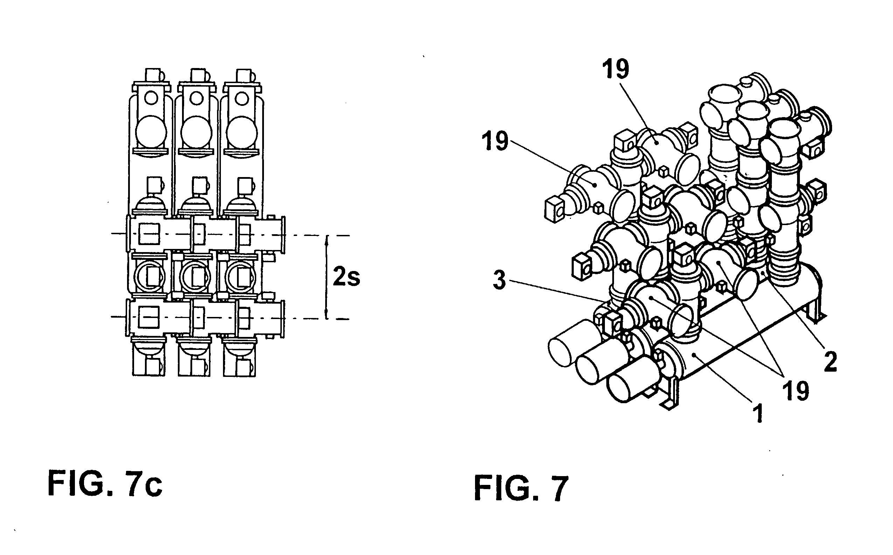

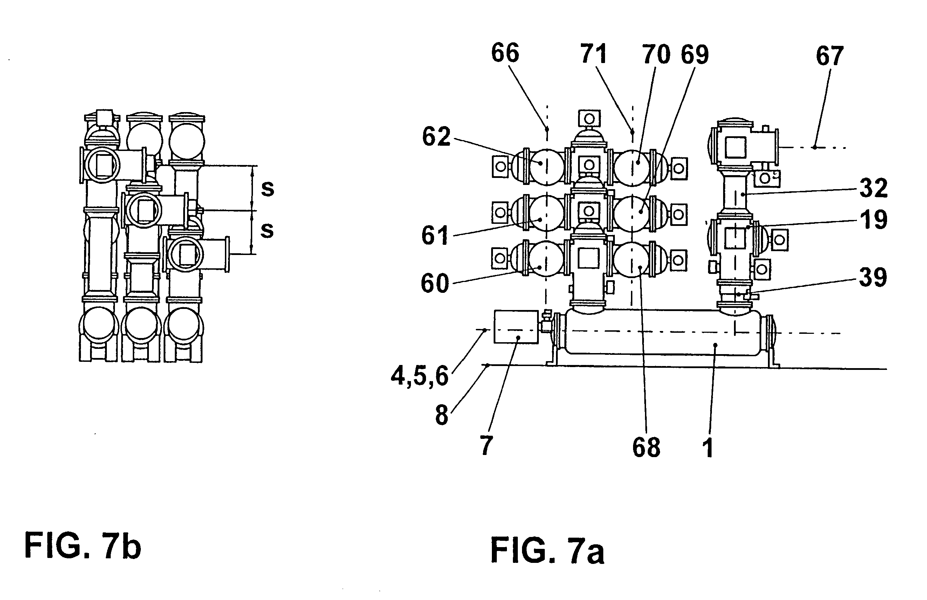

Die Fig. 7, 7a, 7b und 7c zeigen eine vereinfachte Darstellung einer dritten Ausführungsform eines als Abgangsfeld ausgelegten Schaltfeldes der metallgekapselten gasisolierten Schaltanlage. Diese Anlage ist mit einer Doppelsammelschiene ausgestattet. Die Achsen dieser Sammelschienen 68, 69, 70 verlaufen in einer durch eine strichpunktierte Linie 71 angedeuteten Ebene parallel zu den Sammelschienen 60, 61, 62. Die Sammelschienen 68, 69, 70 werden gleichartig geführt, wie dies im Zusammenhang mit den Sammelschienen 60, 61, 62 der Figur 5 beschrieben wurde. Der durch eine Achse 67 angedeutete Abgang ist gleich aufgebaut, wie in der Figur 1.

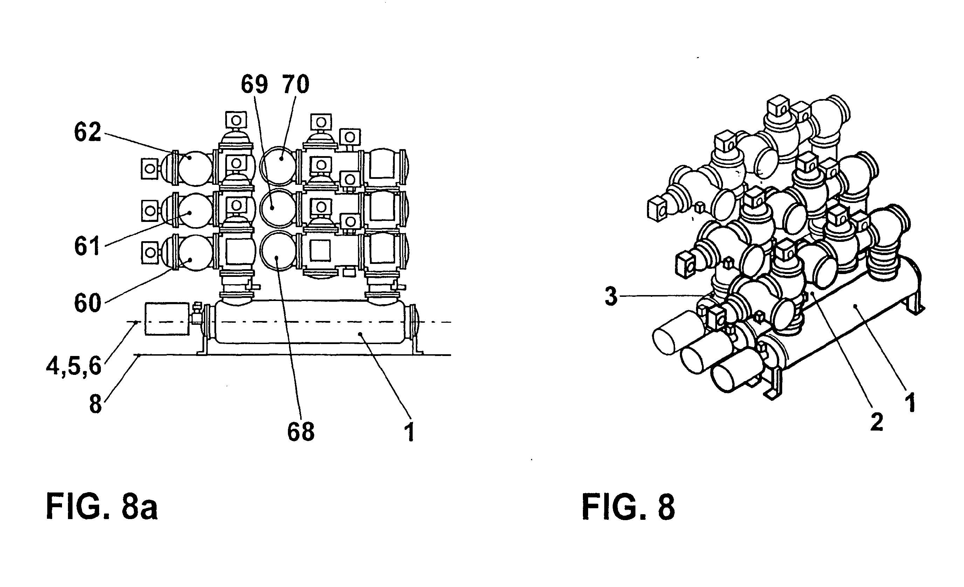

Die Figuren 8 und 8a zeigen eine vereinfachte Darstellung einer Ausführungsform eines als Kuppelfeld für die Querkupplung von Sammelschienen ausgelegten Schaltfeldes der metallgekapselten gasisolierten Schaltanlage mit der Doppelsammelschienenanordnung. Die Sammelschienen 60, 61, 62 und die Sammelschienen 68, 69, 70 sind nach dem gleichen Raster angeordnet wie in der Figur 6 dargestellt. Die Sammelschiene 60 wird bei diesem Querkuppelfeld durch den Leistungsschalter 1 hindurch mit der Sammelschiene 68 verbunden, die Sammelschiene 61 wird durch den Leistungsschalter 2 hindurch mit der Sammelschiene 69 verbunden und die Sammelschiene 62 wird durch den Leistungsschalter 3 hindurch mit der Sammelschiene 70 verbunden. Dieses Querkuppelfeld ist sehr kompakt aufgebaut, es weist eine vergleichsweise besonders geringe Bauhöhe auf.

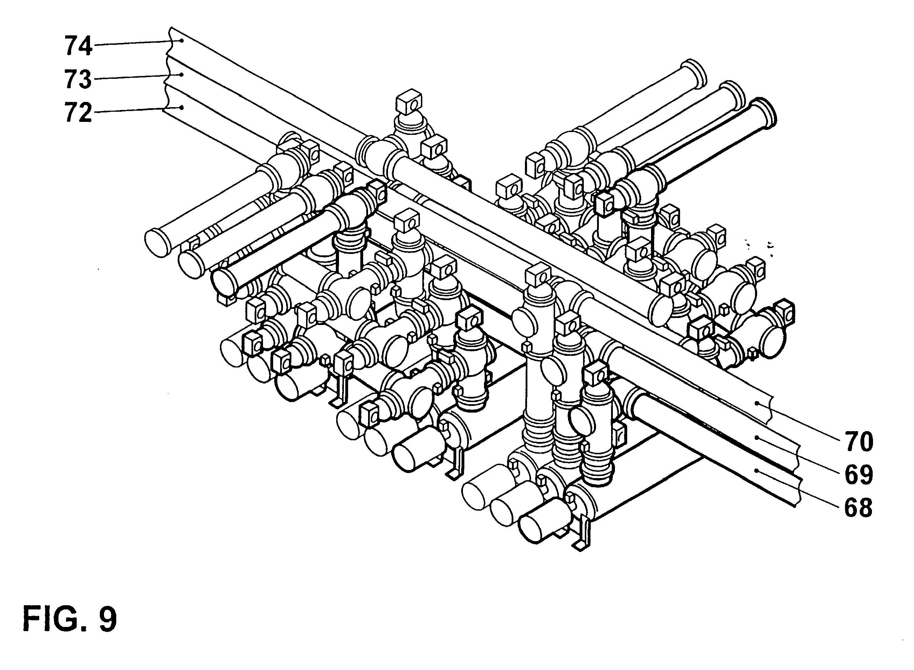

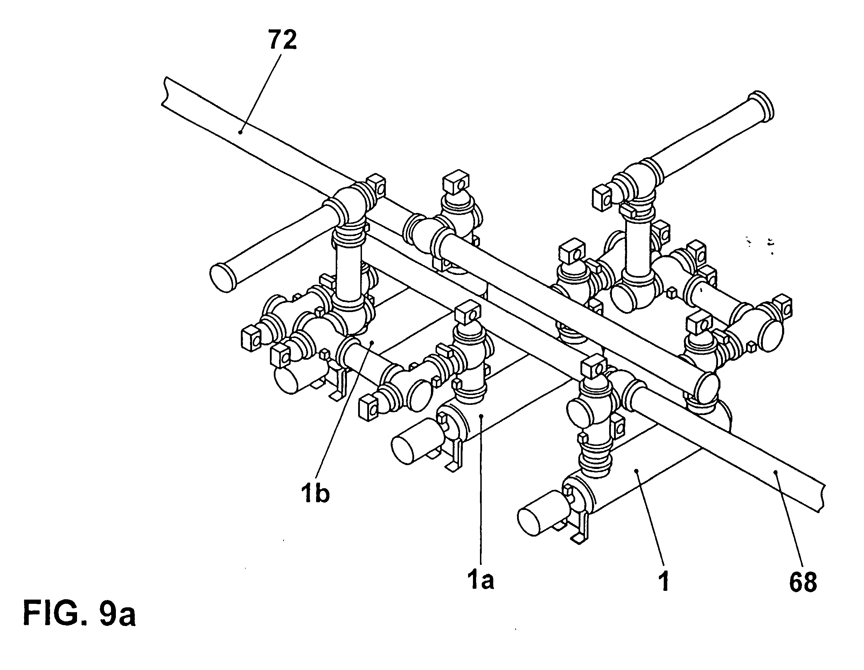

Die Figur 9 zeigt eine vereinfachte perspektivische Darstellung einer zweiten Ausführungsform einer aus drei Schaltfeldern zusammengesetzten 1½-Schalter-Anordnung. Bei dieser Anordnung liegen beide Sammelschienensysteme innerhalb des U-förmigen Bereichs oberhalb der Leistungsschalter 1, 2, 3, la, 2a, 3a, 1b, 2b und 3b. Diese vorteilhaft kompakte Anordnung von Sammelschienen ergibt sich auch bei Schaltanlagen, die als Ringschaltung oder als Doppelschalteranordnung ausgelegt sind. In der Figur 6 sind dies die Sammelschienen 68, 69, 70 und die daneben gestrichelt dargestellten Sammelschienen 72, 73, 74. Die Sammelschienen 72, 73, 74 sind in einer durch eine strichpunktierte Linie 75 angedeuteten Ebene angeordnet, die im Abstand des 1,5-fachen Modulmasses M von der durch die strichpunktierte Linie 71 angedeuteten Ebene parallel zu dieser liegt. Die Achsen der beiden Sammelschienensysteme verlaufen parallel zueinander. Der besseren Anschaulichkeit halber ist in der Figur 9a eine einzige herausgezeichnete Phase der Ausführungsform der 1½-Schalter-Anordnung gemäss Figur 9 dargestellt. Hieraus lässt sich der Aufbau der 1½-Schalter-Anordnung deutlich erkennen. Der Raumbedarf für diese 1½-Schalter-Anordnung ist sehr klein, da die beiden Sammelschienensysteme vollständig innerhalb des über den Leistungsschaltern liegenden, stets sowieso vorhandenen U-förmigen Bereichs untergebracht sind und keinerlei zusätzlichen Raum benötigen. Diese Anordnung weist einen vorteilhaft tiefen Schwerpunkt auf und besonders kurze Verbindungswege.

Die hier beschriebenen Schaltfelder mit versetzt und fluchtend in einer Reihe angeordneten Leistungsschaltern sind ab der Oberkante der Anschlussstutzen 16, 17, 18 und der Anschlussstutzen 25, 26, 27 nach oben hin konsequent modular in einem Raster mit dem Modulmass M aufgebaut. Auf diese Art gelingt es, die Anzahl der nötigen Verbindungsteile vorteilhaft zu minimieren, was die Lagerhaltung und die Lagerbewirtschaftung wesentlich vereinfacht. Das Modulmass M ist so gewählt, dass die Bauhöhe der Schaltfelder deutlich kleiner ist als bei herkömmlichen Anordnungen. Die Gleichsetzung des Modulmasses M mit dem Achsabstand s der Sammelschienen ermöglicht besonders platzsparende Anordnungen für Schaltfelder, wie die beschriebenen Ausführungsbeispiele zeigen. Der Abstand zwischen benachbarten Leistungsschaltern kann aber muss nicht in das modulare Raster passen.

Durch die beiden Aufstellungsvarianten für die Leistungsschalter wird die Anzahl der möglichen Schaltfeldausführungen vorteilhaft erhöht, zum Teil ist es sogar möglich, bestimmte Standardschaltungen mit beiden Aufstellungsvarianten zu realisieren, sodass jeweils die den baulichen und finanziellen Gegebenheiten am besten entsprechende Ausführung ausgewählt werden kann. Eine derartige vorteilhafte Flexibilität erleichtert die Projektierung von metallgekapselten gasisolierten Schaltanlagen wesentlich. Ferner wirkt es sich vorteilhaft aus, dass die Schaltfelder sehr kompakt ausgebildet sind, was sowohl im Hinblick auf Erdbebensicherheit als auch im Hinblick auf kleine Transporteinheiten sehr positiv ist.

### BEZEICHNUNGSLISTE

- 1,2,3: Leistungsschalter
- 4,5,6: Längsachse
- 7: Antrieb
- 8: Fundamentoberfläche
- 9,10,11: Sammelschienen
- 12: strichpunktierte Linie
- 13,14,15: Achsen
- 16,17,18: Anschlussstutzen
- 19: Verbindungselement
- 19a: Innenraum
- 19b,19c: Öffnung
- 20: Verlängerungsteil
- 21: Längsachse
- 21a: Querachse
- 22,23,24: Längsachsen
- 25,26,27: Anschlussstutzen
- 28,29,30: Längsachsen
- 31: Zwischenstück
- 32: Zwischenrohr
- 33,34,35: Längsachsen
- 36,37,38: Abgänge
- 39,40,41: Verbindungsschienen
- 42: strichpunktierte Linie
- 43,44,45: Zwischenräume
- 46,47: Abgangsfelder
- 48: Kuppelfeld
- 49,50: Sammelschienensysteme
- 60,61,62: Sammelschienen
- 63,64,65: Achsen
- 66: strichpunktierte Linie
- 67: Achse
- 68,69,70: Sammelschienen
- 71: strichpunktierte Linie
- 72,73,74: Sammelschienen
- 75: strichpunktierte Linie
- s: Achsabstand der Sammelschiene
- M: Modulmass

## Patentansprüche

1. Einphasig metallgekapselte gasisolierte Schaltanlage mit mindestens einem mehrphasigen, auf einer Fundamentoberfläche (8) befestigten Schaltfeld, mit in allen Bereichen des Schaltfelds unmittelbar benachbart angeordneten Phasen, mit jeweils mindestens einem Leistungsschalter (1,2,3) pro Phase, welcher sich entlang einer ersten Längsachse (4,5,6) erstreckt, wobei diese ersten Längsachsen (4,5,6) in einer ersten Ebene angeordnet sind, mit einem auf der Antriebsseite des Leistungsschalters (1,2,3) vorgesehenen, von der ersten Ebene weg führenden ersten Anschlussstutzen (16,17,18), mit einem auf der dem Antrieb abgewandten Seite des Leistungsschalters (1,2,3) vorgesehenen, von der ersten Ebene parallel zum ersten Anschlussstutzen (16,17,18) weg führenden zweiten elektrischen Anschlussstutzen (25,26,27), mit mindestens einem in mindestens einer zweiten Ebene angeordneten, entlang von parallel verlaufenden Sammelschienenachsen (13,14,15) erstreckten, Sammelschienensystem, bei welchem die Sammelschienenachsen (13,14,15) in einer Richtung senkrecht zu der Richtung der ersten Längsachsen (4,5,6) verlaufen und einen Achsabstand (s) aufweisen, **dadurch gekennzeichnet,**
**dass** der Abstand zwischen der Längsachse (22, 23, 24) des ersten Anschlussstutzens (16,17,18) und der Längsachse (28, 29, 30) des zweiten Anschlussstutzens (25,26,27) jedes Leistungsschalters (1,2,3) mindestens dreimal und höchstens viermal so gross ist, wie der ein Modulmass M darstellende Achsabstand (s) der Sammelschienenachsen (13,14,15),
**dass** die Leistungsschalter (1,2,3) des Schaltfelds um das Modulmass M, welches dem Achsabstand (s) der Sammelschienenachsen (13,14,15) entspricht, gegeneinander versetzt sind, und
**dass** die zweite Ebene parallel zur ersten Ebene angeordnet ist.

2. Einphasig metallgekapselte gasisolierte Schaltanlage mit mindestens einem mehrphasigen, auf einer Fundamentoberfläche (8) befestigten Schaltfeld, mit jeweils mindestens einem Leistungsschalter (1,2,3) pro Phase, welcher sich entlang einer ersten Achse (4,5,6) erstreckt, wobei die Leistungsschalter (1,2,3) des Schaltfelds nebeneinander in einer Reihe fluchtend angeordnet sind, und wobei diese ersten Achsen (4,5,6) in einer ersten Ebene angeordnet sind, mit einem auf der Antriebsseite des Leistungsschalters (1,2,3) vorgesehenen, von der ersten Ebene weg führenden ersten Anschlussstutzen (16,17,18), mit einem auf der dem Antrieb (7) abgewandten Seite des Leistungsschalters (1,2,3) vorgesehenen, von der ersten Ebene parallel zum ersten Anschlussstutzen (16,17,18) weg führenden zweiten Anschlussstutzen (25,26,27), mit mindestens einem in mindestens einer zweiten, senkrecht zur ersten Ebene angeordneten, entlang von parallel verlaufenden Achsen (63,64,65) von Sammelschienen (60,61,62) erstreckten, Sammelschienensystem, bei welchem die Achsen (63,64,65) in einer Richtung senkrecht zu der Richtung der ersten Achsen (4,5,6) verlaufen und einen Achsabstand (s) aufweisen, **dadurch gekennzeichnet,**
**dass** der Abstand zwischen der Längsachse (22, 23, 24) des ersten Anschlussstutzens (16,17,18) und der Längsachse (28, 29, 30) des zweiten Anschlussstutzens (25,26,27) jedes Leistungsschalters (1,2,3) mindestens dreimal und höchstens viermal so gross ist, wie der ein Modulmass M darstellende Achsabstand (s) der Achsen (63, 64, 65) .

3. Schaltanlage nach Anspruch 1 oder 2, **dadurch gekennzeichnet,**
- **dass** die erste Ebene parallel oder senkrecht zu der Fundamentoberfläche (8) angeordnet ist.

4. Schaltanlage nach einem der Ansprüche 1 bis 3, **dadurch gekennzeichnet,**
- **dass** der Mittenabstand zwischen dem ersten Anschlussstutzen (16,17,18) und dem zweiten Anschlussstutzen (25,26,27) des Leistungsschalters (1,2,3) das 3,5-fache des Modulmasses M beträgt.

5. Schaltanlage nach einem der voranstehenden Ansprüche, **dadurch gekennzeichnet,**
- **dass** der Kessel des Leistungsschalters (1,2,3) so ausgebildet ist, dass die Löschkammern aus beiden Stirnseiten des Kessels ausbringbar sind.

6. Schaltanlage nach Anspruch 1 oder 2, **dadurch gekennzeichnet,**
- **dass** die Schaltfelder von der Oberkante der Anschlussstutzen (16,17,18,25,26,27) aus modular aufgebaut sind, und
- **dass** hierfür entsprechend längsabgestufte Aufbauelemente vorgesehen sind.

7. Schaltanlage nach Anspruch 6, **dadurch gekennzeichnet,**
- **dass** als Aufbauelemente Zwischenstücke (31) mit für den Einbau von Sensoren geeigneten Vorrichtungen vorgesehen sind, die ein halbes Modulmass M lang sind,
- **dass** als Aufbauelemente Zwischenrohre (32) vorgesehen sind, die ein Modulmass M lang sind, und
- **dass** als Aufbauelemente Verbindungselemente (19) vorgesehen sind, die entlang einer Längsachse (21) eine Länge von 1,5 Modulmassen M aufweisen, und die entlang einer zur Längsachse (21) senkrechten Querachse (21a) eine Länge von einem Modulmass M aufweisen.

8. Schaltanlage nach Anspruch 7, **dadurch gekennzeichnet,**
- **dass** das Verbindungselement (19) mit vier mit Flanschen versehenen Öffnungen mit gleichem Durchmesser ausgestattet ist, von denen zwei Öffnungen die Querachse (21a) und zwei weitere Öffnungen (19b,19c) die eine Symmetrieachse bildende Längsachse (21) als Zentrum aufweisen,
- **dass** die zwei, die Querachse (21a) als Zentrum aufweisenden Öffnungen jeweils beidseitig der Längsachse (21) im Abstand von einem halben Modulmass M angeordnet sind,
- **dass** die erste (19b) der die Längsachse (21) als Zentrum aufweisenden Öffnungen (19b,19c) auf einer Seite der Querachse (21a) im Abstand von einem halben Modulmass M angeordnet ist, und
- **dass** die zweite (19c) der die Längsachse (21) als Zentrum aufweisenden Öffnungen (19b,19c) auf der anderen Seite der Querachse (21a) im Abstand von einem Modulmass M angeordnet ist.

9. Schaltanlage nach Anspruch 2, **dadurch gekennzeichnet,**
- **dass** bei Schaltfeldern mit 1½-Schalter-Anordnung, mit Ringschaltung oder mit Doppelschalteranordnung beide Sammelschienensysteme so im Bereich oberhalb des Leistungsschalters (1,2,3) zwischen dem ersten Anschlussstutzen (16,17,18) und dem zweiten Anschlussstutzen (25,26,27) angeordnet sind, dass sie nicht über die Ebene der Abgänge hinausragen.

## Claims

1. Single-phase metal-encapsulated, gas-insulated switchgear assembly having at least one polyphase switch panel which is mounted on a foundation surface (8), having phases which are arranged immediately adjacent in all regions of the switch panel, having in each case at least one circuit breaker (1, 2, 3) per phase, which extends along a first longitudinal axis (4, 5, 6), these first longitudinal axes (4, 5, 6) being arranged on a first plane, having a first connecting stub (16, 17, 18) which is provided on the drive side of the circuit breaker (1, 2, 3) and points away from the first plane, having a second electrical connecting stub (25, 26, 27) which is provided on the side of the circuit breaker (1, 2, 3) facing away from the drive and points away from the first plane, parallel to the first connecting stub (16, 17, 18), having at least one busbar system which is arranged on at least a second plane and extends along parallel busbar axes (13, 14, 15) and on which the busbar axes (13, 14, 15) run in a direction at right angles to the direction of the first longitudinal axes (4, 5, 6) and have a distance (s) between them, **characterized**
**in that** the distance between the longitudinal axis (22, 23, 24) of the first connecting stub (16, 17, 18) and the longitudinal axis (28, 29, 30) of the second connecting stub (25, 26, 27) of each circuit breaker (1, 2, 3) is at least three times and at most four times as great as that distance (s) between the busbar axes (13, 14, 15) which represents a module dimension M,
**in that** the circuit breakers (1, 2, 3) in the switch panel are offset with respect to one another by the module dimension M which corresponds to the distance (s) between the busbar axes (13, 14, 15), and
**in that** the second plane is arranged parallel to the first plane.

2. Single-phase metal-encapsulated, gas-insulated switchgear assembly having at least one polyphase switch panel which is mounted on a foundation surface (8), having in each case at least one circuit breaker (1, 2, 3) per phase, which extends along a first axis (4, 5, 6), the circuit breakers (1, 2, 3) of the switch panel being arranged aligned alongside one another in a row, and these first axes (4, 5, 6) being arranged on a first plane, having a first connecting stub (16, 17, 18) which is provided on the drive side of the circuit breaker (1, 2, 3) and points away from the first plane, having a second connecting stub (25, 26, 27) which is provided on the side of the circuit breaker (1, 2, 3) facing away from the drive (7) and points away from the first plane, parallel to the first connecting stub (16, 17, 18), having at least one busbar system which is arranged on at least a second plane at right angles to the first and extends along parallel axes (63, 64, 65) of busbars (60, 62, 62) and on which the axes (63, 64, 65) run in a direction at right angles to the direction of the first axes (4, 5, 6) and have a distance (s) between them, **characterized**
**in that** the distance between the longitudinal axis (22, 23, 24) of the first connecting stub (16, 17, 18) and the longitudinal axis (28, 29, 30) of the second connecting stub (25, 26, 27) of each circuit breaker (1, 2, 3) is at least three times and at most four times as great as that distance (s) between the axes (63, 64, 65) which represents a module dimension M.

3. Switchgear assembly according to Claim 1 or 2, **characterized**
- **in that** the first plane is arranged parallel to or at right angles to the foundation surface (8).

4. Switchgear assembly according to one of Claims 1 to 3, **characterized**
- **in that** the distance between centers between the first connecting stub (16, 17, 18) and the second connecting stub (25, 26, 27) of the circuit breaker (1, 2, 3) is 3.5 times the module dimension M.

5. Switchgear assembly according to one of the preceding claims, **characterized**
- **in that** the tank of the circuit breaker (1, 2, 3) is designed such that the quenching chambers can be removed from both ends of the tank.

6. Switchgear assembly according to Claim 1 or 2, **characterized**
- **in that** the switch panels are constructed in a modular manner from the top edge of the connecting stubs (16, 17, 18, 25, 26, 27), and
- **in that** correspondingly longitudinally stepped mounting elements are provided for this purpose.

7. Switchgear assembly according to Claim 6, **characterized**
- **in that** the mounting elements are intermediate pieces (31) having apparatuses which are suitable for the fitting of sensors and have a length of half the module dimension M,
- **in that** the mounting elements are intermediate tubes (32) whose length is equal to the module dimension M, and
- **in that** the mounting elements are connecting elements (19) which have a length of 1.5 module dimensions M along a longitudinal axis (21) and have a length of one module dimension M along a transverse axis (21a) at right angles to the longitudinal axis (21).

8. Switchgear assembly according to Claim 7, **characterized**
- **in that** the connecting element (19) is equipped with four openings which are provided with flanges and have the same diameter, two of which openings have as their center the transverse axis (21a), and two other openings (19b, 19c) have as their center the longitudinal axis (21) which forms an axis of symmetry,
- **in that** the two openings which have the transverse axis (21a) as their center are respectively arranged on either side of the longitudinal axis (21) and are separated from the latter by half the module dimension M,
- **in that** the first (19b) of the openings (19b, 19c) which have the longitudinal axis (21) as their center is arranged on one side of the transverse axis (21a) at a distance from it of half the module dimension M, and
- **in that** the second (19c) of the openings (19b, 19c) which have the longitudinal axis (21) as their center is arranged on the other side of the transverse axis (21a) at a distance from it equal to the module dimension M.

9. Switchgear assembly according to Claim 2, **characterized**
- **in that**, in the case of switch panels having a 1½-switch arrangement, having a ring circuit or having a double-switch arrangement, the two busbar systems are arranged in the region above the circuit breaker (1, 2, 3) between the first connecting stub (16, 17, 18) and the second connecting stub (25, 26, 27) such that they do not project above the plane of the outgoers.

## Revendications

1. Équipement de commutation monophasé sous blindage métallique à isolement gazeux, comprenant au moins un panneau de commutation à plusieurs phases fixé sur une surface d'embase (8), avec des phases juxtaposées directement dans toutes les zones du panneau de commutation, comprenant respectivement au moins un commutateur de puissance (1, 2, 3) par phase, lequel s'étend le long d'un premier axe longitudinal (4, 5, 6), ces premiers axes longitudinaux (4, 5, 6) étant disposés dans un premier plan, comprenant un premier raccord (16, 17, 18) prévu sur le côté entraînement du commutateur de puissance (1, 2, 3) et s'éloignant du premier plan, comprenant un deuxième raccord électrique (25, 26, 27) prévu sur le côté opposé à l'entraînement du commutateur de puissance (1, 2, 3) et s'éloignant du premier plan parallèlement au premier raccord (16, 17, 18), comprenant au moins un système de barre-bus disposé dans au moins un deuxième plan et s'étendant le long d'axes de barre-bus (13, 14, 15) parallèles, les axes de barre-bus (13, 14, 15) s'étendant dans une direction perpendiculaire à la direction des premiers axes longitudinaux (4, 5, 6) et présentant un entraxe (s), **caractérisé en ce que** l'écart entre l'axe longitudinal (22, 23, 24) du premier raccord (16, 17, 18) et l'axe longitudinal (28, 29, 30) du deuxième raccord (25, 26, 27) de chaque commutateur de puissance (1, 2, 3) est au moins trois fois et au plus quatre fois plus grand que l'entraxe (s) des axes de barre-bus (13, 14, 15) qui représente une cote de module M, **en ce que** les commutateurs de puissance (1, 2, 3) du panneau de commutation sont décalés les uns des autres de la cote de module M, laquelle correspond à l'entraxe (s) des axes de barre-bus (13, 14, 15), et **en ce que** le deuxième plan est disposé parallèlement au premier plan.

2. Équipement de commutation monophasé sous blindage métallique à isolement gazeux, comprenant au moins un panneau de commutation à plusieurs phases fixé sur une surface d'embase (8), comprenant respectivement au moins un commutateur de puissance (1, 2, 3) par phase, lequel s'étend le long d'un premier axe (4, 5, 6), les commutateurs de puissance (1, 2, 3) du panneau de commutation étant disposés les uns à côté des autres alignés dans une rangée et ces premiers axes (4, 5, 6) étant disposés dans un premier plan, comprenant un premier raccord (16, 17, 18) prévu sur le côté entraînement du commutateur de puissance (1, 2, 3) et s'éloignant du premier plan, comprenant un deuxième raccord (25, 26, 27) prévu sur le côté opposé à l'entraînement (7) du commutateur de puissance (1, 2, 3) et s'éloignant du premier plan parallèlement au premier raccord (16, 17, 18), comprenant au moins un système de barre-bus disposé dans au moins un deuxième plan, perpendiculaire au premier plan, et s'étendant le long d'axes (63, 64, 65) parallèles de barre-bus (60, 61, 62), les axes (63, 64, 65) s'étendant dans une direction perpendiculaire à la direction des premiers axes longitudinaux (4, 5, 6) et présentant un entraxe (s), **caractérisé en ce que** l'écart entre l'axe longitudinal (22, 23, 24) du premier raccord (16, 17, 18) et l'axe longitudinal (28, 29, 30) du deuxième raccord (25, 26, 27) de chaque commutateur de puissance (1, 2, 3) est au moins trois fois et au plus quatre fois plus grand que l'entraxe (s) des axes (63, 64, 65) qui représente une cote de module M.

3. Équipement de commutation selon la revendication 1 ou 2, **caractérisé en ce que**
- le premier plan est parallèle ou perpendiculaire à la surface d'embase (8).

4. Équipement de commutation selon l'une des revendications 1 à 3, **caractérisé en ce que**
- l'écart minimum entre le premier raccord (16, 17, 18) et le deuxième raccord (25, 26, 27) du commutateur de puissance (1, 2, 3) est égal à 3, 5 fois la cote de module M.

5. Équipement de commutation selon l'une des revendications précédentes, **caractérisé en ce que**
- la cuvette du commutateur de puissance (1, 2, 3) est configurée de telle sorte que les chambres d'extinction peuvent être montées des deux côtés frontaux de la cuvette.

6. Équipement de commutation selon la revendication 1 ou 2, **caractérisé en ce que**
- les panneaux de commutation sont de construction modulaire à partir du bord supérieur des raccords (16, 17, 18, 25, 26, 27) et
- des éléments rapportés étagés en longueur en conséquence sont prévus à cet effet.

7. Équipement de commutation selon la revendication 6, **caractérisé en ce que**
- les éléments rapportés prévus sont des pièces intermédiaires (31) comportant des dispositifs conçus pour le montage de capteurs et qui ont une longueur égale à la moitié de la cote de module M,
- les éléments rapportés prévus sont des tubes intermédiaires (32) dont la longueur est égale à une cote de module M et
- les éléments rapportés prévus sont des éléments de liaison (19) qui présentent le long d'un axe longitudinal (21) une longueur égale à 1,5 cotes de module M et qui présentent le long d'un axe transversal (21a) perpendiculaire à l'axe longitudinal (21) une longueur égale à une cote de module M.

8. Équipement de commutation selon la revendication 7, **caractérisé en ce que**
- l'élément de liaison (19) est équipé de quatre ouvertures de diamètre identique munies de brides, dont deux ouvertures présentent comme centre l'axe transversal (21a) et deux autres ouvertures (19b, 19c) l'axe longitudinal (21) formant un axe de symétrie,
- les deux ouvertures qui présentent comme centre l'axe transversal (21a) sont respectivement disposées des deux côtés de l'axe longitudinal (21) à une distance égale à une demi cote de module M,
- la première (19b) des ouvertures (19b, 19c) qui présentent comme centre l'axe longitudinal (21) est disposée d'un côté de l'axe transversal (21a) à une distance égale à une demi cote de module M,
- la deuxième (19c) des ouvertures (19b, 19c) qui présentent comme centre l'axe longitudinal (21) est disposée de l'autre côté de l'axe transversal (21a) à une distance égale à une cote de module M.

9. Équipement de commutation selon la revendication 2, **caractérisé en ce que**
- dans le cas des panneaux de commutation avec un arrangement d'1½ commutateur, avec commutation en anneau ou avec un arrangement à double commutateur, les deux systèmes de barre-bus sont disposés dans la zone au-dessus du commutateur de puissance (1, 2, 3) entre le premier raccord (16, 17, 18) et le deuxième raccord (25, 26, 27) de telle sorte qu'ils de dépassent pas au-dessus du plan des sorties.
